# EUROPEAN PATENT SPECIFICATION

(11) **EP 3 782 832 B1**
(45) Date of publication and mention of the grant of the patent: **13.03.2024**
(21) Application number: 19193080.9
(22) Date of filing: 22.08.2019
(51) Int. Cl.: B60H 1/22, B60R 13/02

(54) **TRIM COMPONENT FOR CLADDING AN INTERIOR SPACE OF A MEANS OF PASSENGER TRANSPORT**
VERKLEIDUNGSKOMPONENTE ZUR VERKLEIDUNG EINES INNENRAUMS EINES PERSONENTRANSPORTMITTELS
ÉLÉMENT DE GARNITURE DE GAINAGE D'UN ESPACE INTÉRIEUR D'UN MOYEN DE TRANSPORT DE PASSAGERS

(43) Date of publication of application: 24.02.2021
(73) Proprietor: Motherson Innovations Company Limited, London EC2N 2AX (GB)
(72) Inventor: HEINZ, Christoph, 79268 Bötzingen (DE); JOHANNBÖKE, Eckhard, 79268 Bötzingen (DE)
(74) Representative: Westphal, Mussgnug & Partner Patentanwälte mbB

(56) References cited:
- DE-A1- 19 904 076
- US-A1- 2012 256 440
- US-A1- 2013 062 130

## Description

The present invention relates to a trim component for cladding an interior space of a means of passenger transport, in particular a vehicle.

The means of passenger transport is embodied in particular as a vehicle, but can also be a ship, an aircraft, a train or the like. In the following the invention is explained with reference to vehicles, however, the explanations shall also apply to other means of passenger transport, such as ships, aircraft, trains or the like.

At present, the interior space of a vehicle typically is heated in two ways. In the first way an air conditioner heats air. The heated air is then distributed through various outlets inside the passenger compartment using an air distribution system comprising for example defrost and/or air ducts. As a consequence areas in the passenger compartment are heated that do not require heating. In addition, the energy required to heat the air is high.

The second way relates to a seat heating or an armrest heating. In a seat heating or an armrest heating a heating mat with heating wires or heating foils with electrically conductive pastes are employed. Heating mats and heating foils are additional components which cause additional costs, in particular as they should be mounted or integrated such that they are not visible to a vehicle passenger.

In order to overcome these disadvantages DE 10 2008 045 757 A1 discloses a skin that may be laminated to trim components of a vehicle, the skin being made of a plastic like polyvinylchloride. The skin is connected to a conductive layer that is provided with an embedded electrically conductive path. The conductor path consists of a mixture of the plastic material of the skin and a conductive material. Thus there are at least two layers. The conductive material is incorporated into the plastic material by a rolling kneading process. To produce the skin a sintering process or a spray process is needed. To connect the conductive layer to the skin an adhesive, a solvent and a roller process need to be employed. Thus the manufacturing process is expensive.

EP 1 325 665 A1 is related to a carbon fiber-embedded heating paper and a sheet heater comprising such a heating paper. The alignment of the carbon fibers is controlled to give different heating characteristics to lateral and transverse directions of the said heating paper. In this heating paper pulp is fabricated in the carbon fibers to have heating characteristics to lateral and transverse directions and the sheet heater comprised of the polymer coating to have electrically insulating characteristics. Ceramic fibers, ceramic powders or their mixture are dispersed as heat-conducting material together with carbon fibers.

KR 2016 0040 364 A relates to a heating element for a vehicle seat using carbon fibers to provide a seat heating wherein the seat is woven using horizontal thread and vertical thread.

Carbon fibers are inserted into the horizontal thread or the vertical thread at predetermined intervals such that a fabric is formed. Copper wires or nichrome wires for applying power to the carbon fibers are inserted into the horizontal thread or the vertical thread, thereby being resistible against repeated loads or impacts.

Neither the heating paper of EP 1 325 665 A1 nor the heating element disclosed in KR 2016 0040 364 A are suited to produce trim components in a cost-efficient way.

Further trim components are disclosed in CN 10 6808 715 B, WO 2011/65694 A1, DE 20 2016 106 374, EP 2 184 149 A1, US 2012/256440 A1, US 2013/062130 A1, DE 199 04 076 A1 and EP 2 505 342 A1.

It is one task of one embodiment of the present invention to present a trim component for cladding an interior space of a means of passenger transport, in particular a vehicle, by which the interior space may be heated in an efficient way.

The task is solved by the features specified in claim 1. Advantageous embodiments are the subject of the dependent claims.

According to an embodiment the trim component for cladding an interior space of a means of passenger transport, in particular a vehicle, comprises a base body made of a plastic or a polymer, carbon fibers embedded into the plastic or polymer, and at least one anode and at least one cathode welded onto the base body or embedded into the plastic or polymer.

The plastic or the polymer may be a thermoplastic resin or a thermosetting resin. Trim components may be door side panels, instrument panels and center consoles. Carbon fiber reinforced polymers (CFRPs) are increasingly used due to their lightweight construction potential.

As proposed only one anode and one cathode have to be welded onto or embedded into the base body. With this simple design it is possible to select the trim components or areas of the trim component that should be heated. Thus only desired areas of the interior space of the vehicle can be heated. No additional components such as heating mats or heating foils are required. The integration of the anode and the cathode into the basic body is easier compared to the integration of heating mats heating foils. Compared to heating via air the heating of the trim components is more energy-efficient, particularly due to the fact that only desired areas of the interior space may be heated. As an example in case only one person, namely the driver, is present in the interior space the rear part of the interior space is not heated, contrary to heating via air.

According to the invention the content of carbon fibers (16) embedded into the plastic or polymer is at least 10% (wt/wt). In case the amount of carbon fibers exceeds a certain level, approximately 10% (wt/wt), a stable current conductive network is formed that can be used to heat the trim components in a controlled manner.

According to the invention the carbon fibers are recycled carbon fibers. It is possible to use recycled carbon fibers as they are available at an economical prize that is usually lower compared to unutilized carbon fibers. The base body may be made of recycled plastic or polymer. Moreover, the use of recycled plastic or polymer and recycled carbon fibers adds to the sustainability of the trim components.

In another embodiment the polymer is polypropylene or polyamide, polycarbonate or acrylnitril-butadien-styrol-copolymer. A trim component made of polypropylene (PP), polyamide (PA), polycarbonate (PC) or acrylnitril-butadien-styrol-copolymer (ABS) has advantageous mechanical properties, e.g., with respect to the crashworthiness of the vehicle. Thus, safety requirements vehicles must fulfil can be met.

According to another embodiment the base body is made of a foam material. By using foam material the trim components may be provided with soft and resilient portions such as armrests and seats. Moreover, very light trim components may be provided when using foam material.

In a further embodiment the foam material is polyurethane. Depending on the choice of the precursors (polyol and polyisocyanate) the foam material can be provided with a broad range of properties. Particularly the mechanical properties can be chosen by the degree of cross-linking. The carbon fibers are embedded once the precursors mentioned react with each other. Thus, polyurethanes are a very versatile compound.

In another embodiment the base body is at least partly laminated with at least one layer. Such a layer may be a textile or a decorative layer. The at least one layer may serve for adjusting the appearance of the trim component to the design of the remaining interior space. Moreover, a given section of the trim component may be provided with specific features, e.g., a reduced hardness in the armrest.

According to another embodiment the base body comprises at least one surface provided with a surface texture. The surface texture may also serve for adjusting the appearance of the trim component to the design of the interior space. As an example the surface texture may be chosen to provide grains or the like. No additional layers are necessary.

A process of manufacturing a trim component according to one of the embodiments previously presented, comprises the following steps:
- providing a pelletized carbon-fiber reinforced plastics, the carbon fiber content being at least 10% (wt/wt), wherein the carbon fibers are recycled carbon fibers,
- forming a base body by injection molding using pelletized carbon-fiber reinforced plastics, and
- welding at least one anode and at least one cathode onto the base body or embedding at least one anode and at least one cathode into the base body.

The possibility to form the base body using injection molding is a very important criterion in the vehicle production. By using injection molding a high number of trim components may be produced within a short time at low costs.

Alternatively the anode and/or the cathode are embedded into the base body during the step of forming a base body by injection molding. The anode and the cathode may be inserted into the injection mold and the base body may be injection-molded around the anode and the cathode. No additional manufacturing steps are needed to embed the anode and the cathode into the base body. The production process is thereby accelerated.

In accordance with a further implementation the process further comprises the step of at least partially laminating at least one layer onto the base body. As mentioned, such a layer may be a textile or a decorative layer. The at least one layer may serve for adjusting the appearance of the trim component to the design of the remaining interior space. Moreover, a given section of the trim component may be provided with specific features, e.g., a reduced hardness in the armrest. It is worth mentioning that it is possible to only partially laminating the base body, leaving the remaining base body unchanged. It is thus not necessary to produce a separate part for the armrest. The armrest can be integrated into the trim component such that the number of components may be kept low.

According to a further implementation the process further comprises the step of providing at least one surface of the base body with a surface texture. As mentioned, the surface texture may also serve for adjusting the appearance of the trim component to the design of the interior space. As an example the surface texture may be chosen to provide grains or the like. No additional layers are necessary. The surface texture may be provided by an injection mold that is appropriately equipped.

Another aspect is directed to the use of pelletized carbon-fiber reinforced plastics for manufacturing a trim component according to one of the embodiments mentioned above, the carbon fiber content being preferably at least 10% (wt/wt), and the carbon fibers being recycled carbon fibers. In case the amount of carbon fibers exceeds a certain level, approximately 10% (wt/wt), a stable current conductive network is formed that can be used to heat the trim components in a controlled manner. Apart from an anode and a cathode no additional means for heating are necessary in the trim components. It is in particular possible to use recycled plastics, polymers and/or recycled carbon fibers which are available at competitive costs. The trim components manufactured from carbon-fiber reinforced plastics are sustainable and possess mechanical properties advantageous for the crashworthiness of the vehicle.

Another aspect is directed to a vehicle comprising a trim component according to one of the embodiments described above. The advantages and technical effects described with reference to the trim components equally apply to the vehicle.

The present invention is described in detail with reference to the drawings attached wherein
Figure 1 shows a perspective and principle sketch of a first embodiment of a trim component as proposed,
Figure 2 shows a perspective and principle sketch of a second embodiment of a trim component as proposed,
Figure 3 shows a principle sectional view of a third embodiment of a trim component as proposed,
Figure 4 shows a principle sectional view of a fourth embodiment of a trim component as proposed, and
Figure 5 is a principle top view of a vehicle equipped with a trim component according to one of the embodiments shown in Figures 1 to 4.

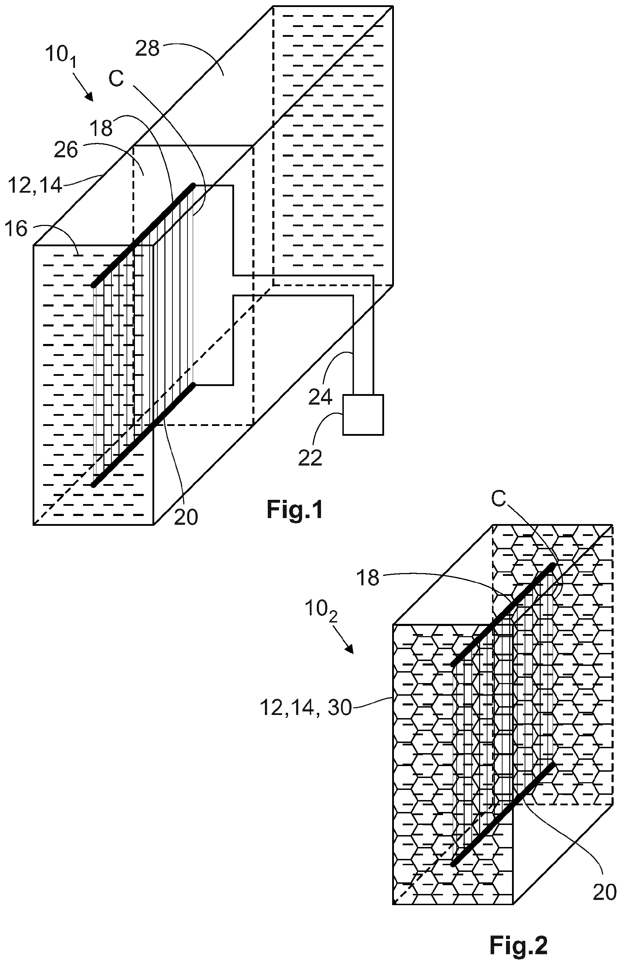

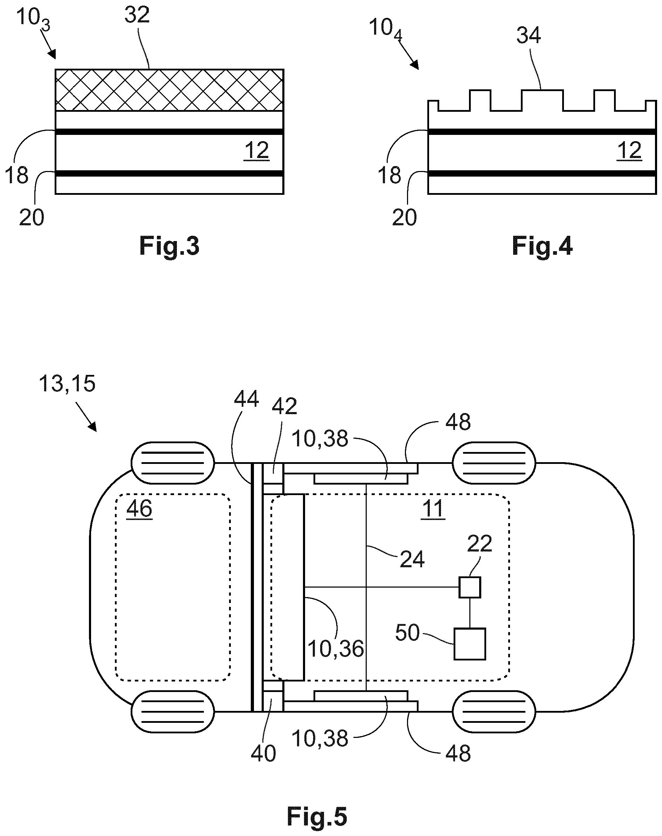

In Figure 1 a first embodiment of a trim component 10₁ for cladding an interior space 11 of a means of passenger transport 13, in particular a vehicle 15 (see Figure 5) is shown by means of a principle and perspective view. The trim component 10₁ comprises a base body 12 that is made of a plastic or a polymer 14 such as a thermoplastic resin 14 or a thermosetting resin. The use of polypropylene (PP) or polyamide (PA) as the polymer 14 is particularly suited. The base body 12 further comprises carbon fibers 16 that are embedded into the plastic or a polymer 14. The amount of carbon fibers 16 is equal to or higher than 10% (wt/wt) with reference to the plastic or a polymer 14, preferably higher than 15%. The plastic or a polymer 14 may have been recycled previously. The carbon fibers 16 have been recycled previously. The trim component 10₁ according to the first embodiment is thus a part made from carbon fiber reinforced polymer (CFRP), in this case from PPCF (polypropylene and carbon fiber).

Moreover, the trim component 10₁ comprises an anode 18 and a cathode 20 that are embedded into the base body 12. The anode 18 and the cathode 20 are connected to a power source 22 by means of a wiring 24 such that a current may be applied to the anode 18 and the cathode 20. The carbon fibers 16 provide a current conductive network that can be used to heat the trim component 10₁ in a controlled manner when applying a current to the anode 18 and the cathode 20. The direction of current flow between the anode 18 and the cathode 20 is indicated by the lines C.

As evident from Figure 1 the anode 18 and the cathode 20 are provided in a first section 26 of the trim component 10₁ whereas a second section 28 of the trim component 10₁ is free of the anode 18 and the cathode 20. As a consequence only the first section 26 may actively be heated. A trim component 10₁ may be provided with more than one anode 18 and more than one cathode 20. Depending on the arrangement of the anodes 18 and the cathodes 20 one or more sections of the trim component 10₁ are actively heated whereas other sections may not be actively heated. It is thus possible to only heat the sections of interest of the trim component 10₁.

Figure 2 shows a perspective and principle sketch of a second embodiment of a trim component 10₂ as proposed. The basic layout of the trim component 10₂ of the second embodiment is the same as of the trim component 10₁ of the first embodiment. Figure 2 is therefore reduced to the essential parts.

According to the second embodiment of trim component 10₂ the base body 12 is made of a foam material 30, e.g., polyurethane. Depending on the settings and in particular the degree of cross-linking the mechanical properties of the trim component 10₂ according to the second embodiment may differ from those of the trim component 10₁ of the first embodiment. In particular the resilience may be higher so that the trim component 10₂ of the second embodiment may be used for armrests or seats.

Figure 3 shows a principle sectional view of a third embodiment of a trim component 10₃ as proposed. Also in this case the basic layout of the trim component 10₃ of the third embodiment is the same as of the trim component 10₁ of the first embodiment. However, a layer 32 is laminated onto the base body 12. The layer 32 may be a textile or a decorative layer. The layer 32 may only be laminated on parts of the base body 12 whereas other parts of the base body 12 may be free of the layer 32. It is also possible to laminate more than one layer 32 to the base body 12. Two different or equal layers 32 may be arranged on top of each other or side by side.

The at least one layer 32 may serve for adjusting the appearance of the trim component 10₃ to the design of an interior space 11 of a vehicle 15 (see Figure 5). Moreover, a given section of the trim component 10₃ may be provided with specific features, e.g., a reduced hardness or increased fluffiness in the armrest. The at least one layer 32 forms the face of the trim component 10₃ visible to a vehicle 15 passenger (see Figure 5).

Figure 4 shows a principle sectional view of a fourth embodiment of a trim component 10₄ as proposed. Also in this case the basic layout of the trim component 10₄ of the fourth embodiment is the same as of the trim component 10₁ of the first embodiment. However, in this case the base body 12 comprises at least one surface provided with a surface texture 34. The surface texture 34 may also serve for adjusting the appearance of the trim component 10₁ to the design of the interior space 11 (see Figure 5). Moreover the surface texture 34 may be used to adjust the haptic of the trim component 10₁.

As an example the surface texture 34 may be chosen to provide grains or the like. No additional layers 32 are necessary. The surface that is provided with the surface texture 34 is typically the face of the trim component 10₄ visible to a vehicle 15 passenger.

The embodiments of the trim component 10₃ and 10₄ shown in Figures 3 and 4 may also be integrated into one single trim component 10.

Figure 5 is a principle top view on a means for passenger transport 13, in this case a vehicle 15. The vehicle 15 comprises an interior space 11 that is cladded with a number of trim component 10 according to one of the embodiments presented above. In this case the trim components 10 are embodied as one instrument panel 36 and two door side panels 38. The instrument panel 36 is fastened to a first A-pillar 40 and a second A-pillar 42 and a partition wall 44 separating the interior space 11 from an engine compartment 46. The vehicle 15 comprises two side doors 48 each of which being provided with one of the door side panels 38.

As mentioned with reference to Figure 1 the anodes 18 and cathodes 20 (not shown in Figure 5) are connected to the power source 22. The power source 22 may be the battery of the vehicle 15. The wiring 24 may also connect the battery with a climate control unit 50 by which the temperature in the interior space 11 can be controlled. A current may be applied to the anodes 18 and cathodes 20 according to the commands of the climate control unit 50 such that the temperature in the interior space 11 may be increased to the desired value.

### Reference list

- 10: trim component
- 10₁ - 10₄: trim component
- 11: interior space
- 12: base body
- 13: means for passenger transport
- 14: resin
- 15: vehicle
- 16: carbon fiber
- 18: anode
- 20: cathode
- 22: power source
- 24: wiring
- 26: first section
- 28: second section
- 30: foam material
- 32: layer
- 34: surface texture
- 36: instrument panel
- 38: door side panel
- 40: A-pillar
- 42: A-pillar
- 44: partition wall
- 46: engine compartment
- 48: side door
- 50: climate control unit

- C: direction of current flow

## Claims

1. Trim component (10) for cladding an interior space (11) of a means of passenger transport (13), in particular a vehicle (15), the trim component (10) comprising
- a base body (12) made of a plastic or polymer (14),
- carbon fibers (16) embedded into the plastic or polymer (14), and
- at least one anode (18) and at least one cathode (20) welded onto the base body (12) or embedded into the plastic or polymer (14),
**characterized in that**
- the content of carbon fibers (16) embedded into the plastic or polymer (14) is at least 10% (wt/wt) and
- the carbon fibers (16) are recycled carbon fibers (16).

2. Trim component (10) according to claim 1,
**characterized in that** the plastic or polymer (14) is polypropylene, polyamide, polycarbonate or acrylnitril-buta-dien-styrol-copolymer.

3. Trim component (10) according to claim 1,
**characterized in that** the base body (12) is made of a foam material (30).

4. Trim component (10) according to claim 3,
**characterized in that** the foam material (30) is polyurethane.

5. Trim component (10) according to one of the preceding claims,
**characterized in that** the base body (12) is at least partly laminated with at least one layer (32).

6. Trim component (10) according to one of the preceding claims,
**characterized in that** the base body (12) comprises at least one surface provided with a surface texture (34).

## Patentansprüche

1. Verkleidungskomponente (10) zur Verkleidung eines Innenraums (11) eines Personentransportmittels (13), insbesondere eines Fahrzeugs (15), wobei die Verkleidungskomponente (10) aufweist:
- einen aus einem Kunststoff oder Polymer (14) hergestellter Basiskörper (12),
- in den Kunststoff oder das Polymer (14) eingebettete Kohlenstofffasern (16), und
- zumindest eine Anode (18) und zumindest eine Kathode (20), die auf den Basiskörper (12) geschweißt oder in den Kunststoff oder das Polymer (14) eingebettet sind,
**dadurch gekennzeichnet, dass**
- der Anteil von in den Kunststoff oder das Polymer (14) eingebetteten Kohlenstofffasern (16) zumindest 10 % (Gew./Gew.) beträgt
- wobei die Kohlenstofffasern (16) recycelte Kohlenstofffasern (16) sind.

2. Verkleidungskomponente (10) nach Anspruch 1,
**dadurch gekennzeichnet, dass** der Kunststoff oder das Polymer (14) Polypropylen, Polyamid, Polycarbonat oder AcrylnitrilButadien-Styrol-Copolymer ist.

3. Verkleidungskomponente (10) nach Anspruch 1,
**dadurch gekennzeichnet, dass** der Basiskörper (12) aus einem Schaumstoffmaterial (30) hergestellt ist.

4. Verkleidungskomponente (10) nach Anspruch 3,
**dadurch gekennzeichnet, dass** das Schaumstoffmaterial (30) Polyurethan ist.

5. Verkleidungskomponente (10) nach einem der vorhergehenden Ansprüche,
**dadurch gekennzeichnet, dass** der Basiskörper (12) zumindest teilweise mit zumindest einer Schicht (32) laminiert ist.

6. Verkleidungskomponente (10) nach einem der vorhergehenden Ansprüche,
**dadurch gekennzeichnet, dass** der Basiskörper (12) zumindest eine Oberfläche, die mit einer Oberflächentextur (34) versehen ist, aufweist.

## Revendications

1. Composant d'habillage (10) pour habiller l'espace intérieur (11) d'un moyen de transport de passagers (13), en particulier d'un véhicule (15), le composant d'habillage (10) comprenant :
- un corps de base (12) en plastique ou polymère (14),
- des fibres de carbone (16) dans le plastique ou le polymère (14), et
- au moins une anode (18) et au moins une cathode (20) soudées au corps de base (12) ou noyées dans le plastique ou le polymère (14), composant **caractérisé en ce que**
- la teneur en fibres de carbone (16) dans le plastique ou le polymère (14) correspond à au moins 10% pondéraux, et
- les fibres de carbone (16) sont des fibres de carbone recyclées (16).

2. Composant d'habillage (10) selon la revendication 1,
**caractérisé en ce que**
le plastique ou le polymère (14) est du polypropylène, polyamide, polycarbonate ou copolymère-acryle-nitrile-butadiène-styrène.

3. Composant d'habillage (10) selon la revendication 1,
**caractérisé en ce que**
le corps de base (12) est une mousse (30).

4. Composant d'habillage (10) selon la revendication 3,
**caractérisé en ce que**
la mousse (30) est du polyuréthane.

5. Composant d'habillage (10) selon l'une des revendications précédentes,
**caractérisé en ce que**
le corps de base (12) est au moins en partie laminé avec au moins une couche (32).

6. Composant d'habillage (10) selon l'une des revendications précédentes,
**caractérisé en ce que**
le corps de base (12) a au moins une surface munie d'une texture de surface (34).
